# EUROPÄISCHE PATENTSCHRIFT

(11) **EP 1 357 061 B1**
(45) Veröffentlichungstag und Bekanntmachung des Hinweises auf die Patenterteilung: **04.02.2009**
(21) Anmeldenummer: 03009226.6
(22) Anmeldetag: 23.04.2003
(51) Int. Cl.: B65G 1/04

(54) **Lagerfahrzeug und Regalfahrzeug mit einem derartigen Lagerfahrzeug**
Satellite car for shelf storage and storage vehicle with such a satellite car
Chariot de transport pour rayonnage d'entrepôt et vehicule d'entrepôt avec un tel chariot

(30) Priorität: 23.04.2002 DE 20206372 U
(43) Veröffentlichungstag der Anmeldung: 29.10.2003
(73) Patentinhaber: Westfalia Logistics Technologies GmbH & Co. KG, 33829 Borgholzhausen (DE)
(72) Erfinder: Upmeyer, Ulrich, 33829 Borgholzhausen (DE)
(74) Vertreter: Philipp, Matthias

(56) Entgegenhaltungen:
- DE-A1- 2 435 741
- DE-U1- 8 210 739
- GB-A- 1 429 785
- US-A- 4 971 507
- US-A- 5 082 415

## Beschreibung

Die Erfindung betrifft ein Lagerfahrzeug ("Satellit") zum Betrieb in einem Regallager, um Lagerplätze zu bedienen, die in der Regel auf mehreren Lagerebenen verteilt sind und über Lagerkanäle zugänglich sind, in denen das Lagerfahrzeug verfahrbar ist, nach dem Oberbegriff des Anspruchs 1.

Das Gebrauchsmuster DE 94 08 348 U1 offenbart ein derartiges Lagerfahrzeug.

Die Erfindung betrifft ferner ein Regalfahrzeug zur Aufnahme eines derartigen Lagerfahrzeugs.

Aus dem Gebrauchsmuster DE 94 08 348 U1 ist ein automatisches Kleinteilelager mit einem Regalfahrzeug bekannt, das eine vertikal verfahrbare Hebebühne mit einem in einen Lagerkanal unter einen dort gelagerten Gegenstand fahrbaren Lagerfahrzeug mit Hubvorrichtung zum Anheben des Gegenstands aufweist, wobei der Lagerkanal mit Führungen für das Lagerfahrzeug versehen ist. Dieses Lager ist dahingehend nachteilig, daß die Bauhöhe des Lagerfahrzeugs relativ groß ist, wodurch jeder einzelne Lagerkanal unterhalb der Lagerebene der Gegenstände einen entsprechend hohen Freiraum aufweisen muß, damit das Lagerfahrzeug zumindest teilweise unter einen Gegenstand fahren, diesen anheben und entlang des Lagerkanals verfahren kann.

Ein aus US 4,395,181 bekanntes Lagerfahrzeug mit angekoppeltem, davon quer Wegfahrbarem Hilfsfahrzeug eignet sich nicht zum Unterfahren von Paletten durch das Lagerfahrzeug selbst.

Der vorliegenden Erfindung liegt die Aufgabe zugrunde, die Bauhöhe eines Lagerfahrzeugs zu reduzieren, um dadurch zu einer größeren Lagerungsdichte in einem Lager für Gegenstände mit vorgegebenen Abmessungen zu kommen.

Diese Aufgabe wird erfindungsgemäß durch ein Lagerfahrzeug nach Anspruch 1 gelöst.

Durch die funktionale Trennung von Fahreinheit, die alle für den Antrieb zuständigen Elemente enthält, und Hubeinheit, die lediglich die für das Anheben eines Gegenstands erforderlichen Elemente enthält, kann die Hubeinheit flacher als bisher ausgeführt werden und somit der vertikale Abstand benachbarter Lagerkanäle verkleinert werden.

Die Kopplung ermöglicht eine Winkelverlagerung zwischen Fahr- und Hubeinheit um eine vertikale Achse . Alternativ hierzu oder zusätzlich kann vorgesehen sein, daß die Verbindung eine begrenzte Relativbewegung zwischen Fahr- und Hubeinheit in vertikaler und/oder horizontaler Richtung ermöglicht. Fahr- und Hubeinheit können kardanisch miteinander verbunden sein.

Die Verbindung zwischen Fahr- und Hubeinheit kann dergestalt ausgebildet sein, daß die Hubeinheit schwenkbar an einem an der Fahreinheit vertikal und/oder horizontal verlagerbaren Befestigungsschlitten angebracht ist.

Bevorzugt ist vorgesehen, daß ein Hubantrieb zum Anheben und Absenken der Hubplattform in der Fahreinheit integriert ist.

Der Antriebsmotor kann auf mindestens eines der Laufräder und/oder auf mindestens eines der Tragräder wirken.

Die Hubeinheit kann eine Unterplatte und eine die Hubplattform tragende oder bildende Oberplatte aufweisen, wobei Unter- und Oberplatte durch einen Hubantrieb gegeneinander bewegbar sind. Hierfür können zwischen Ober- und Unterplatte Keilflächen angeordnet sein, die bei einer horizontalen Relativbewegung zwischen Ober- und Unterplatte eine Vertikalbewegung der Oberplatte bzw. Hubplattform bewirken.

Weiter kann vorgesehen sein, daß Fahr- und/oder Hubeinheit mit seitlichen Führungsrädern versehen sind.

Die Laufräder können einen größeren Durchmesser als die Tragräder aufweisen.

Bevorzugt ist vorgesehen, daß die Laufräder eine größere Spurweite als die Tragräder aufweisen.

Ferner ist bevorzugt vorgesehen, daß die Laufräder zum Abrollen auf einer Laufebene angeordnet sind, die oberhalb einer Tragebene liegt, auf der die Tragräder abrollen. Insbesondere sieht die Erfindung vor, daß die Laufebene einen vertikalen Abstand von der Tragebene aufweist, der mindestens einer Bauhöhe der Hubeinheit entspricht.

An einer Stirnseite der Hubeinheit kann ein Sicherungsriegel für einen transportierten Gegenstand angeordnet sein, der bei abgesenkter Hubplattform eingezogen und bei angehobener Hubplattform ausgefahren ist. Der Sicherungsriegel kann durch die Bewegung der Ober- bzw. Unterplatte zwangsgesteuert sein.

Die der vorliegenden Erfindung zugrundeliegende Aufgabe wird ferner gelöst durch ein Regalfahrzeug mit einem vertikal verfahrbaren Lastaufnahmemittel zum Aufnehmen eines Lagerfahrzeugs nach der Erfindung, mit zwei einander gegenüberliegend angeordneten horizontalen Tragprofilen, die jeweils zwei vertikal und horizontal gegeneinander versetzte Laufbahnen für Räder eines Lagerfahrzeugs bilden, wobei an dem Lastaufnahmemittel ein Lademittel angeordnet ist, mit dem ein Gegenstand erfaßbar und auf das Lastaufnahmemittel oder ein darauf befindliches Lagerfahrzeug oder von diesem wegbewegbar ist.

Es kann vorgesehen sein, daß entlang eines Teilbereichs der Tragprofile die oberen, außenliegenden Laufbahnen jeweils durch einen Ketten- oder Gurtförderer ersetzt sind. Dabei kann es zweckmäßig sein, wenn die Tragprofile quer zu einer Fahrtrichtung des Regalfahrzeuges ausgebildet sind.

Insbesondere besteht die Möglichkeit, daß an dem Regalfahrzeug eine Dreheinrichtung angeordnet ist, um die Tragprofile leer oder mit einem aufgenommenen Lagerfahrzeug in eine gewünschte Stellung zu drehen, um ein Lagerfahrzeug (30) aufzunehmen oder freizugeben.

Bevorzugt ist vorgesehen, daß die Dreheinrichtung als Drehscheibe ausgebildet ist, wobei es insbesondere zweckmäßig ist, wenn die Dreheinrichtung beiderseits zu einer Längsrichtung, in der das Regalfahrzeug verfahrbar ist, um jeweils 90° drehbar ist.

Es besteht die Möglichkeit, daß das Lademittel zur Drehung mit der Dreheinrichtung angeordnet ist. Das Lademittel kann in Form von zwei parallel angeordneten Lineareinheiten ausgebildet sein. Die Lineareinheiten können zum Erfassen von Gegenständen mit vorgegebenen Abmessungen, insbesondere Lagerbehälter, ausgebildet sein.

Zweckmäßigerweise ist vorgesehen, daß die Lineareinheiten unabhängig voneinander bewegbar sind, um einen Anschlag für einen auf das Regalfahrzeug bewegten Gegenstand zu bilden. Alternativ besteht die Möglichkeit, daß das Lademittel durch zwei gegenläufig arbeitende Schieber gebildet ist, von denen einer der Aufnahme und einer der Abgabe eines Gegenstands dient. Zweckmäßig ist, wenn auf dem Lastaufnahmemittel benachbart zu der Dreheinrichtung ein quer zu einer Längsrichtung, in der das Regalfahrzeug verfahrbar ist, bewegbarer Horizontalförderer für Gegenstände angeordnet ist.

Die Erfindung wird nachfolgend anhand eines Ausführungsbeispiels erläutert, wobei auf eine Zeichnung Bezug genommen ist, in der
Fig. 1 eine schematische Draufsicht auf ein erfindungsgemäßes Regallager, insbesondere Kleinteilelager, mit zwei Lagerregalen und einem dazwischen horizontal verfahrbaren Regalfahrzeug zeigt;
Fig. 2 schematisch und ausschnittsweise einen Vertikalschnitt durch einen Bereich eines Lagerregals nach Fig. 1 zeigt;
Fig. 3 eine schematische Seitenansicht mehrerer vertikal übereinander angeordneter Lagerkanäle sowie eines Lagerfahrzeugs zeigt;
Fig. 4 eine perspektivische Ansicht eines in einem Lagerkanal befindlichen Lagerfahrzeugs zeigt;
Fig. 5 eine perspektivische Ansicht eines Lagerfahrzeugs zeigt;
Fig. 6 eine Seitenansicht des Lagerfahrzeugs nach Fig. 5 zeigt;
Fig. 7 eine Draufsicht auf das Lagerfahrzeug nach Fig. 5 zeigt;
Fig. 8 und 9 perspektivische Ansichten eines vertikal verfahrbaren Lastaufnahmemittels bzw. Senkrechtschlittens eines erfindungsgemäßen Regalfahrzeugs zeigen, und
Fig. 10 und 11 die Anordnung zweier Kettenförderer im Bereich von Tragprofilen eines Senkrechtschlittens eines Regalfahrzeugs zeigen.

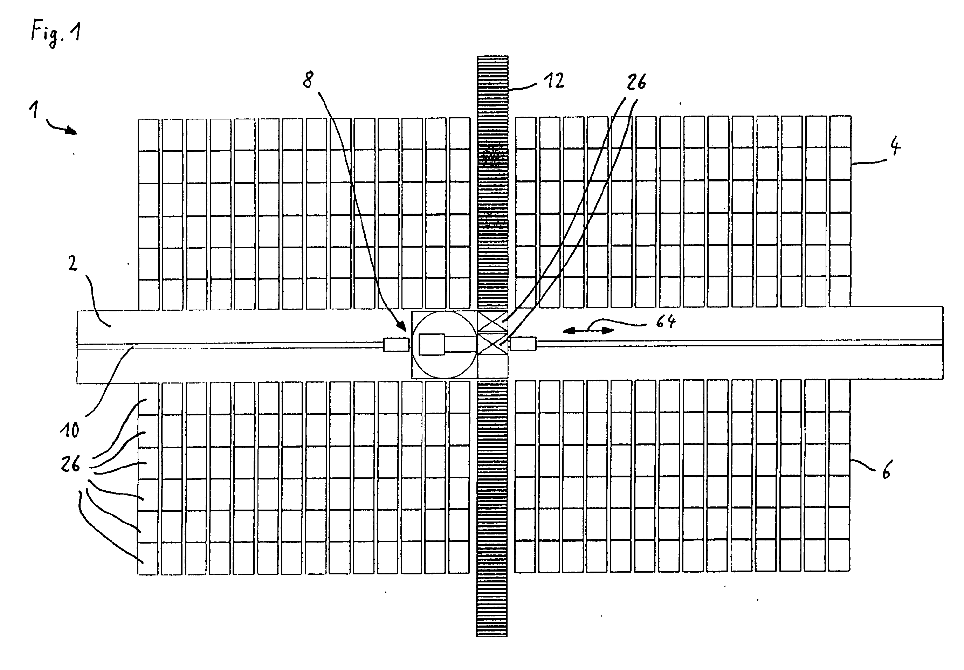

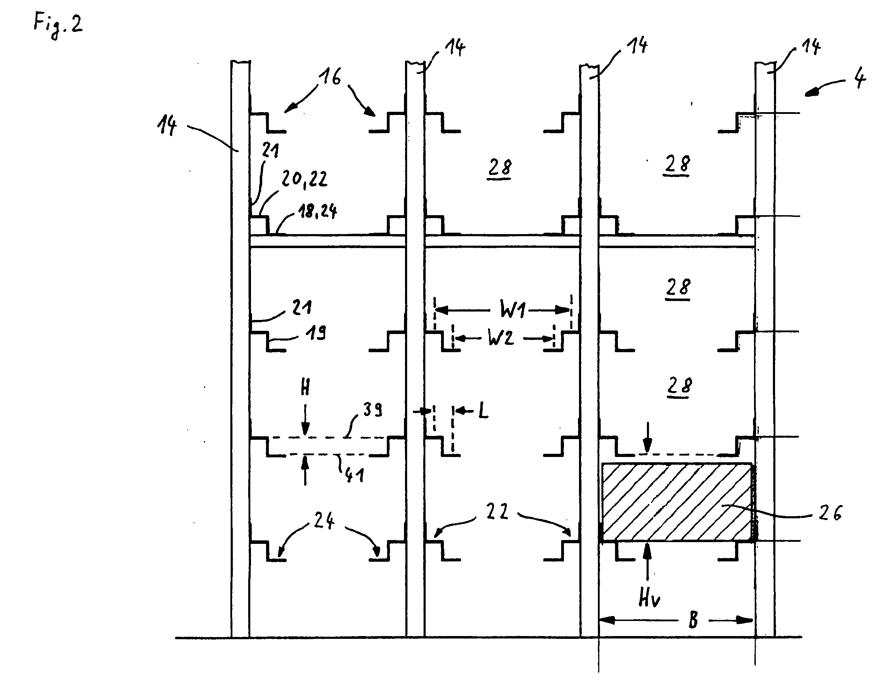

Unter Bezugnahme auf Fig. 1 und 2 wird nachfolgend ein erfindungsgemäßes Lager erläutert, bei dem es sich um ein kompaktes Kleinteilelager handelt. Das im ganzen mit 1 bezeichnete Lager weist beiderseits einer Gasse 2 (mindestens) zwei Lagerregale 4, 6 auf, die von einem Regalfahrzeug 8 bedient werden, welches entlang der Gasse 2 in horizontaler Richtung (Längs- bzw. Verfahrrichtung) 64 auf einer Schiene 10 verfahrbar ist.

In einem mittleren Bereich der Lagerregale 4, 6 ist eine Fördereinrichtung 12 zum horizontalen Transportieren von ein- oder auszulagernden Gegenständen 26 von bzw. zu dem Regalfahrzeug 8 vorgesehen.

Die Lagerregale 4, 6 bilden eine Vielzahl von vertikal übereinander angeordneten Lagerplätzen entlang von Lagerkanälen, deren Struktur sich aus einem Vertikalschnitt durch ein Lagerregal gemäß Fig. 2 ergibt. Zwischen benachbarten, vertikalen Seitenwänden 14 sind mit regelmäßigen vertikalen Abständen horizontal verlaufende Tragprofile 16 paarweise einander gegenüberliegend angeordnet, deren horizontal verlaufende Abschnitte 18, 20 mit ihren jeweiligen Oberseiten zwei Laufbahnen 22, 24 mit einem vertikalen Abstand H bilden.

In dem in Fig. 2 dargestellten Ausführungsbeispiel sind die Laufbahnen 22, 24 durch zwei einander gegenüberliegende, doppelt L-förmig bzw. insgesamt W-förmig abgewinkelte Tragprofile 16 mit vertikalen Abschnitten 19, 21 und horizontalen Abschnitten 18, 20 gebildet, wobei der äußerste, vertikale Abschnitt 21 jeweils an einer Seitenwand 14 fixiert ist. Durch die gezeigte Anordnung weisen die Laufbahnen 22, 24 einerseits einen vertikalen Abstand H und andererseits einen horizontalen (Mitten-)Abstand L bzw. unterschiedliche Spurweiten W1, W2 auf. Auf den jeweils oberen Laufbahnen 22 können Gegenstände 26 gelagert werden, deren maximale Breite durch den lichten Abstand B zweier benachbarter Seitenwände 14 und deren maximale Höhe durch den vertikalen Abstand Hv zwischen einer Laufbahn 22 und dem unteren Ende der darüber angeordneten Tragprofile 16 (jeweils abzüglich eines Handhabungsabstands) festgelegt ist. Beispielsweise könnte der lichte Abstand B zwischen zwei Seitenwänden 14 420 mm betragen und alle 270 mm ein Tragprofil 16 angeordnet sein, so daß Gegenstände mit einer maximalen Breite von 400 mm und einer maximalen Höhe von 200 mm eingelagert werden können, wenn der vertikale Abstand zwischen benachbarten Laufbahnen 22, 24 50 mm beträgt.

Zwischen jeweils zwei horizontal und vertikal benachbarten Tragprofilen 16 ist somit jeweils ein Lagerkanal 28 gebildet, in dem in horizontaler Richtung hintereinander eine Anzahl von einzelnen Gegenständen 26 gelagert werden können, wie dies in Fig. 1 angedeutet ist.

Während es im Rahmen der vorliegenden Erfindung wesentlich ist, daß zwei vertikal beabstandete Laufbahnen 22, 24 je Lagerkanal 28 vorhanden sind, wie aus der nachfolgenden Beschreibung eines Lagerfahrzeugs noch deutlich wird, ist ein unterschiedlicher gegenseitiger horizontaler Abstand der horizontalen Abschnitte von gegenüberliegenden Tragprofilen (unterschiedliche Spurweite) und daher auch die dargestellte Ausbildung der Tragprofile als W-förmig abgewinkelte Profile nicht zwingend. Statt dessen könnte bspw. vorgesehen sein, daß eine obere Laufbahn durch ein erstes L-förmiges Tragprofil gebildet ist, das mit einem vertikalen Abschnitt an einer Seitenwand 14 fixiert ist, und daß eine untere Laufbahn durch ein zweites L-förmiges Tragprofil gebildet ist, welches unterhalb des ersten an der Seitenwand fixiert ist. Auch eine U-förmige Ausbildung der Tragprofile ist denkbar, mit zwei horizontalen Schenkeln, die die Laufbahnen bilden, und einem vertikalen Steg zur Befestigung an der Seitenwand.

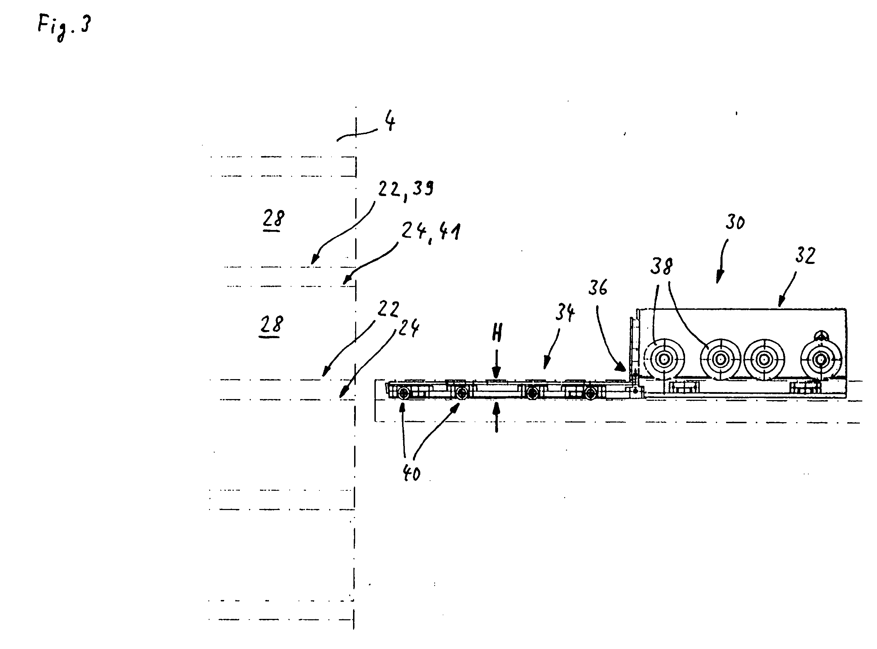

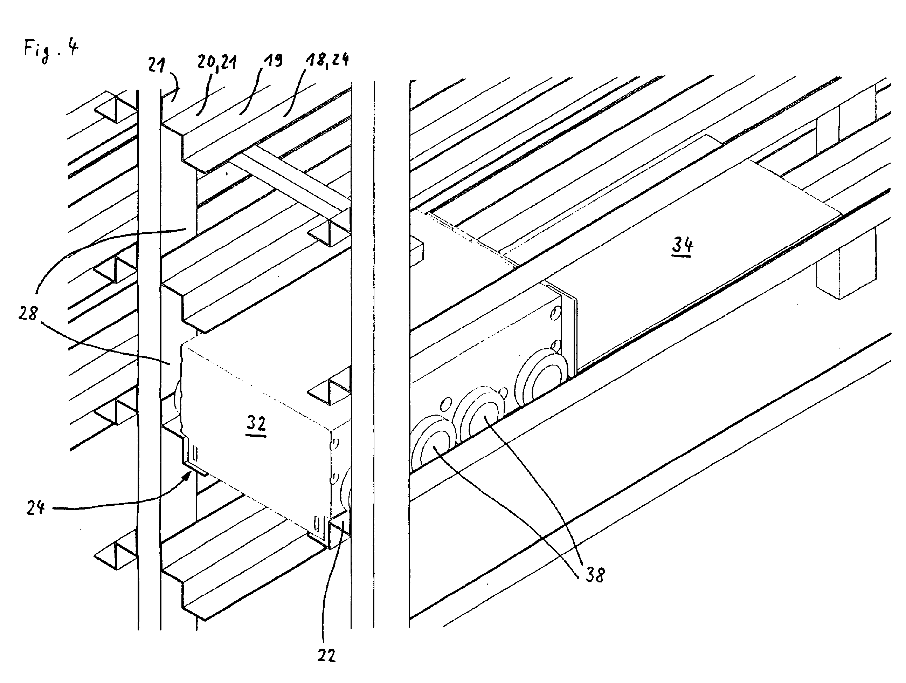

Fig. 3 und 4 erläutern anhand einer schematischen Seitenansicht und einer perspektivischen Ansicht den grundsätzlichen Aufbau eines erfindungsgemäßen Lagerfahrzeugs 30 und dessen Betrieb in einem Lagerregal 4 bzw. einem Lagerkanal 28.

Fig. 3 zeigt in Seitenansicht ein lediglich angedeutetes Lagerregal 4 mit Lagerkanälen 28 und zugehörigen Laufbahnen 22, 24 sowie ein zur Einfahrt in einen Lagerkanal 28 bereitstehendes Lagerfahrzeug 30. Das Lagerfahrzeug 30 ist aus einer Fahreinheit 32 und einer Hubeinheit 34 gebildet, die über eine winkelbewegliche Kopplung 36 miteinander verbunden sind. Die Fahreinheit 32 läuft auf Laufrädern 38, während die Hubeinheit 34 auf Tragrädern 40 läuft.

Wie man anhand Fig. 4 erkennt, nimmt die Fahreinheit 32 im wesentlichen den gesamten zur Einlagerung eines Gegenstands 26 zur Verfügung stehenden freien Querschnitt innerhalb eines Lagerkanals 28 ein, wobei die Laufräder 38 auf den oberen Laufbahnen 22 rollen, die einer Laufebene 39 entsprechen. Die Tragräder 40 der Hubeinheit 34 laufen auf den unteren Laufbahnen 24, die einer Tragebene 41 entsprechen. Die Hubeinheit 34 befindet sich vollständig unterhalb der Laufebene 39 und kann dadurch unter auf den Laufbahnen 22 lagernde Gegenstände 26 bewegt werden und diese durch geringfügiges Anheben aufnehmen, transportieren und an beliebiger Stelle absetzen.

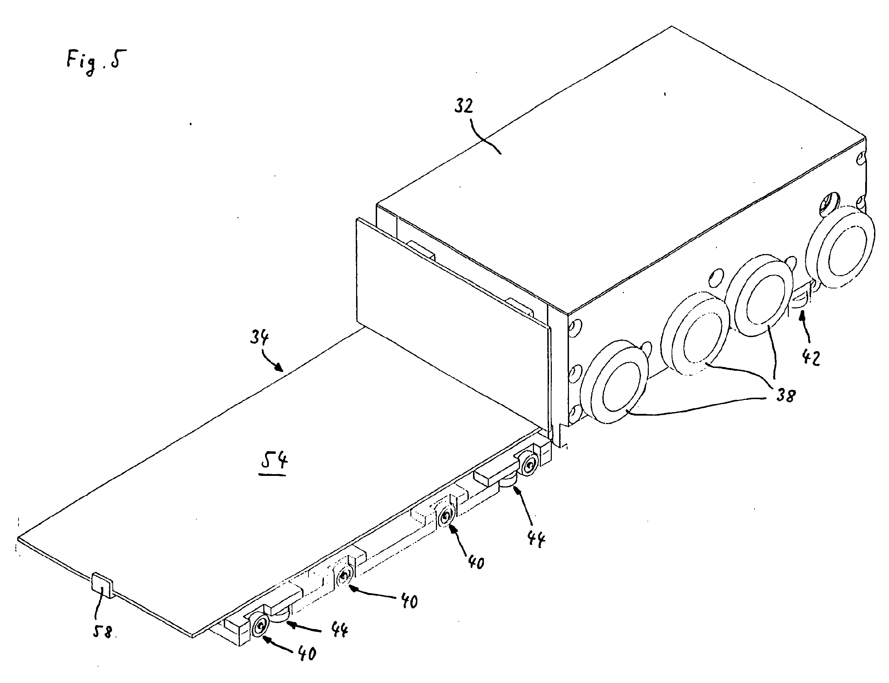

Fig. 5 bis 7 erläutern den Aufbau eines erfindungsgemäßen Lagerfahrzeugs mehr im einzelnen. Die Fahreinheit 32 enthält alle für die Fahr- und Hubfunktionen erforderlichen Komponenten, insbesondere einen Antriebsmotor für die Laufräder 38 sowie einen Hubantrieb zum Anheben und Absenken einer Hubplattform 54 der Hubeinheit 34. Neben den Laufrädern 38 weist die Fahreinheit 32 seitliche Führungsräder 42 auf, die im Betrieb an den vertikalen, zwischen den horizontalen Abschnitten 18 und 20 befindlichen Abschnitten 21 der Tragprofile 16 abrollen und für eine seitliche Führung sorgen.

Die Hubeinheit 34 ist besonders flach mit minimaler Bauhöhe h ausgeführt, was dadurch möglich ist, daß motorische Antriebskomponenten "ausgelagert" und innerhalb der Fahreinheit 32 untergebracht sind. Außer den Tragrädern 40 weist auch die Hubeinheit 34 Führungsräder 44 auf, die im Betrieb ihrerseits an vertikalen Abschnitten 19 der Tragprofile 16 abrollen.

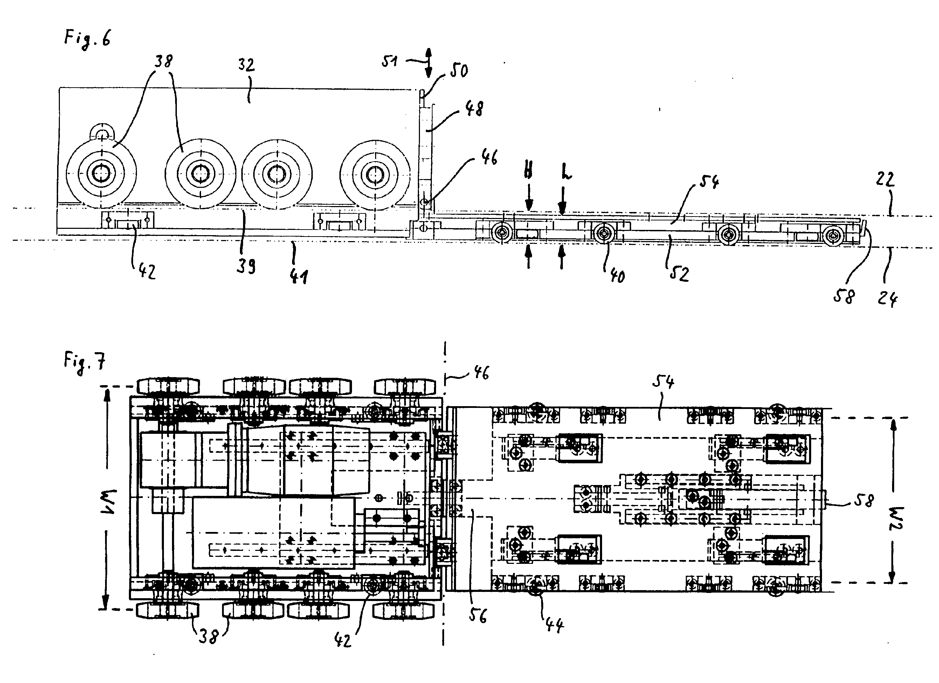

Die flexible Kopplung 36 zwischen Fahr- und Hubeinheit ist hier dadurch realisiert, daß die Hubeinheit 34 um eine horizontale Schwenkachse 46 (Fig. 6) schwenkbar an einem Befestigungsschlitten 48 angelenkt ist, der seinerseits entlang einer Führung 50 in vertikaler Richtung 51 frei verschieblich an einer Stirnseite der Fahreinheit 32 gehalten ist. Aufgrund dieser Anlenkung ist sowohl ein Höhen- als auch ein Winkelausgleich zwischen Fahr- und Hubeinheit möglich, der bspw. dann erforderlich sein kann, wenn das Lagerfahrzeug, wie in Fig. 3 angedeutet ist, bspw. von einem Regalfahrzeug in einen Lagerkanal einfährt oder umgekehrt, wobei geringe Höhendifferenzen zwischen benachbarten Tragprofilen vorhanden sein können. In beliebiger Kombination könnte auch eine Anlenkung an einem in horizontaler Richtung verfahrbaren Schlitten vorgesehen sein.

Wie Fig. 6 erkennen läßt, weist die Hubeinheit 34 eine Unterplatte 52 und eine die Hubplattform bildende Oberplatte 54 auf, wobei die Oberplatte an der Schwenkachse 46 angelenkt ist und die Unterplatte die Tragräder 40 trägt und über ein Verbindungsmittel 56 mit einem Hubantrieb in der Fahreinheit 32 verbunden ist. Zwischen Unter- und Oberplatte 52, 54 sind Keilflächen angeordnet, die bei einer durch den Hubantrieb veranlaßten Horizontalbewegung der Unterplatte 52 (Relativbewegung zwischen Ober- und Unterplatte) eine Vertikalbewegung der Oberplatte 54 bewirken (Anheben oder Absenken).

An einer freien Stirnseite der Hubeinrichtung ist ein Sicherungsriegel 58 angeordnet, der der Sicherung eines auf der Hubplattform bzw. Oberplatte 54 aufgenommenen Gegenstands gegen Abrutschen dient und der bei abgesenkter Hubplattform eingezogen ist (Fig. 6) und bei angehobener Hubplattform ausgefahren ist (Fig. 5). Der Sicherungsriegel 58 wird durch die Relativbewegung zwischen Ober- und Unterplatte automatisch gesteuert. Der Hubantrieb kann bspw. durch einen Elektrospindelmotor gebildet sein.

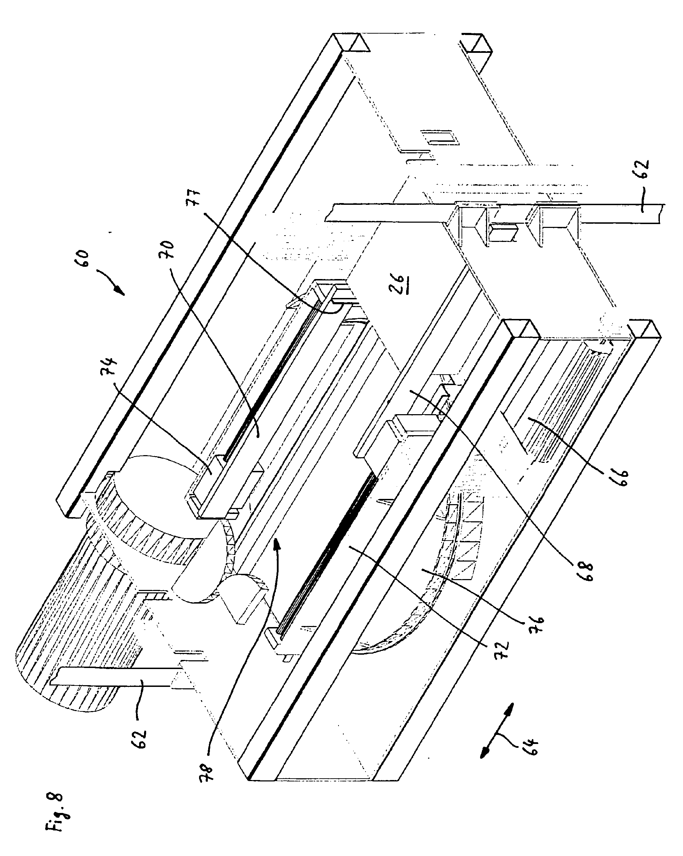

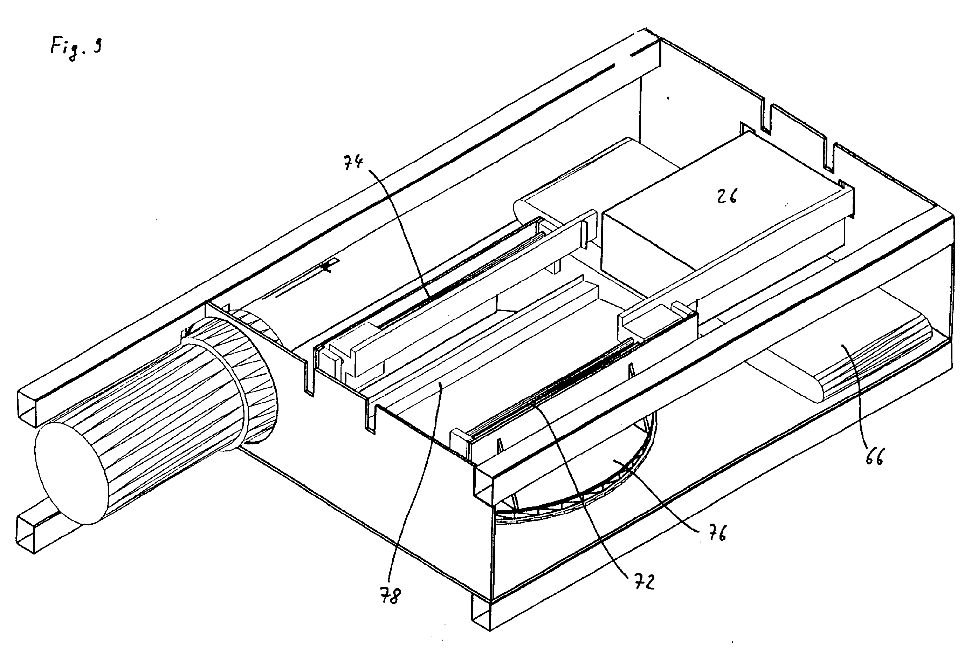

Fig. 8 und 9 erläutern ein erfindungsgemäßes Regalfahrzeug 8 (Fig. 1), wobei lediglich ein Senkrechtschlitten (Lastaufnahmemittel) des Regalfahrzeugs in unterschiedlichen Perspektiven dargestellt ist, welches dem Transport eines Gegenstands oder auch eines leeren oder mit einem Gegenstand beladenen Lagerfahrzeugs in vertikaler Richtung dient.

Der im ganzen mit 60 bezeichnete Senkrechtschlitten ist entlang nicht dargestellter Vertikalführungen des Regalfahrzeugs mit Zahnriemen 62 in senkrechter Richtung bewegbar, während das Regalfahrzeug als Ganzes in horizontaler Richtung 64 (Fig. 1) z.B. auf Schienen verfahrbar ist.

Der Senkrechtschlitten 60 weist ein quer zur Längsrichtung 64 in beiden Richtungen antreibbares Plattenband 66 auf, um einen auf einer Fördereinrichtung 12 (Fig. 1) herantransportierten Gegenstand von dieser aufnehmen oder einen Gegenstand auf diese abgeben zu können. Von dem Plattenband 66 gelangt ein Gegenstand 26 durch längsverfahrbare Arme 68, 70 zweier Lineareinheiten 72, 74 auf eine um eine vertikale Drehachse drehbare Drehscheibe 76. Die Lineareinheiten 72, 74 mit den ausfahrbaren Armen 68, 70 sind auf der Drehscheibe 76 angebracht und mit dieser drehbar, so daß ein aufgenommener Gegenstand 26 anschließend quer zur Längsrichtung in der einen oder anderen Richtung in einen ausgewählten Lagerkanal geschoben werden kann. Mitnehmer 78 auf den Armen 68, 70 erleichtern das Erfassen eines Gegenstands 26.

Wie Fig. 8 weiter zeigt, sind die Arme 68, 70 unabhängig voneinander ausfahrbar, wobei der Arm 68 der Lineareinheit 72 ausgefahren und der Arm 70 der Lineareinheit 74 eingefahren dargestellt ist, so daß der ausgefahrene Arm 68 einen Anschlag für einen auf (in Querrichtung zu dem Arm 68) dem Plattenband 66 herantransportierten Gegenstand bildet. Nachdem der Gegenstand in die dargestellte Stellung bewegt worden ist, fährt auch der andere Arm 70 aus, damit der Gegenstand mit Hilfe beider Arme auf die Drehscheibe gezogen werden kann. Die Drehscheibe kann bei diesen Ladevorgängen leer sein, oder ein Lagerfahrzeug tragen (nicht dargestellt).

Um einen Gegenstand 26 aus dem Lager 1 auszulagern, fährt ein mit dem Gegenstand beladenes Lagerfahrzeug 30 mit der Fahreinheit voran aus einem Lagerkanal 28 auf die Drehscheibe 76, die hierfür gegenüber der dargestellten Stellung um 90° verdreht und mit dem entsprechenden Lagerkanal ausgerichtet wird. Die Drehscheibe 76 weist, entsprechend den Tragprofilen 16 in jedem einzelnen Lagerkanal 28, zwei gegenüberliegende, mit oberen und unteren Laufbahnen wie vorstehend beschrieben versehene Tragprofile 78 auf, die in gegenüber Fig. 8 um 90° verdrehter Drehscheibenstellung die Gasse 2 teilweise überbrücken, so daß das Lagerfahrzeug vollständig auf die Drehscheibe 76 fahren kann. Durch Absenken der Hubplattform 54 wird der Gegenstand auf der Drehscheibe 76 abgesetzt und kann mit Hilfe der Lineareinheiten und des Plattenbands 66 der Fördereinrichtung 12 zugeführt werden.

Alternativ kann auf den Tragprofilen 78 ein leeres oder mit einem Gegenstand beladenes Lagerfahrzeug 30 von einem Lagerkanal übernommen und zwecks Aufnahme oder Abgabe eines Gegenstands an anderer Stelle in einem anderen Lagerkanal abgesetzt werden, nachdem es ggf. um 180° gedreht worden ist, wenn der andere Lagerkanal auf der anderen Seite der Gasse 2 liegt.

In einer alternativen Ausführung können die Lineareinheiten nicht drehbar, sondern feststehend und quer zur Fahrtrichtung 64 des Regalfahrzeugs angeordnet sein.

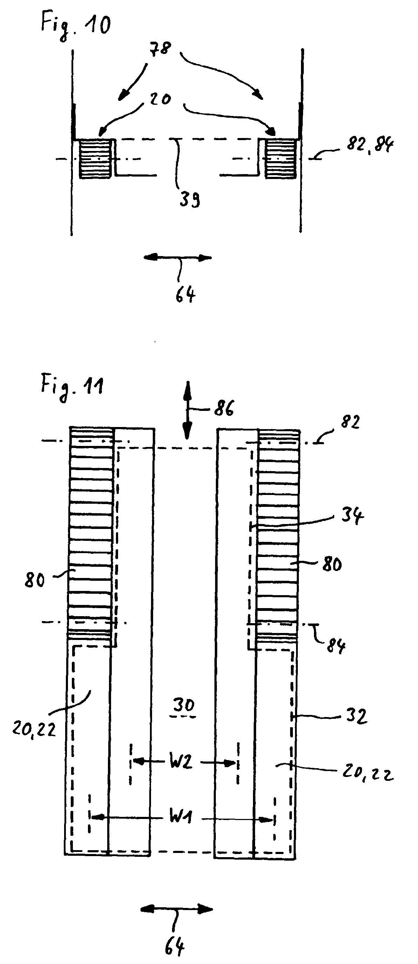

Fig. 10 und 11 zeigen schematisch und ausschnittsweise eine Ausführungsform eines Senkrechtschlittens eines Regalfahrzeugs ohne Dreheinrichtung, das speziell zur Bedienung eines einzelnen Regals vorgesehen ist, das sich auf einer Seite einer Bewegungsebene des Regalfahrzeugs befindet, wie z.B. entweder das Regal 4 oder das Regal 6 nach Fig. 1. Hierbei ist der Senkrechtschlitten bzw. das Lastaufnahmemittel 60 des Regalfahrzeugs mit zwei quer zur Fahrtrichtung 64 und auf gleicher Höhe einander gegenüberliegend angeordneten Tragschienen 78 versehen, deren oberer, horizontaler Abschnitt 20 in einem zu einem zu bedienenden Regal weisenden Bereich (in Fig. 11 oben) durch je einen Ketten- oder Gurtförderer 80 ersetzt ist. Die Kettenförderer 80 haben eine Breite, die der Breite der horizontalen Abschnitte 20 entspricht, und laufen um Umlenk- bzw. Antriebswalzen mit horizontalen Achsen 82, 84 um. In dem zu dem zu bedienenden Regal weisenden Bereich des Senkrechtschlittens ist somit die Laufebene 39, die ansonsten durch die oberen Laufbahnen 22 gebildet wird, gewissermaßen durch das Obertrum der Kettenförderer 80 ersetzt, so daß die Aufnahme bzw. Abgabe von Gegenständen 26 an einen Zuführungsförderer 12 (Fig. 1) möglich ist. Eine derartige Übergabe erfolgt in Richtung des Pfeils 86, wenn sich das Regalfahrzeug mit den Kettenförderern 80 ausgerichtet mit dem Zuführungsförderer 12 befindet.

Insbesondere kann sich hierbei bereits ein erfindungsgemäßes Lagerfahrzeug auf den Tragprofilen 78 befinden, wobei sich die Hubeinheit zwischen den Kettenförderern 80 und die Fahreinheit dahinter befindet, so daß ein Gegenstand mittels der Kettenförderer 80 über die Hubeinheit bewegt und anschließend durch Anheben der Hubeinheit aufgenommen und mit dem Lagerfahrzeug in einen Lagerkanal gefahren werden kann (Bewegungsrichtung des Gegenstands entsprechend Pfeil 86).

Anstelle der Lineareinheiten können Schieber zum Bewegen eines Gegenstands vorgesehen sein, die oberhalb eines Gegenstands und mittig dazu angeordnet sein können, um einen Gegenstand von den Tragprofilen herunterzuschieben oder auf diese heraufzuschieben.

Das Lagerfahrzeug 30 kann in an sich bekannter Weise über ein Kabel mit dem Regalfahrzeug verbunden sein, oder es kann selbständig fahrbereit sein und bspw. eine Funkfernsteuerung aufweisen.

### Bezugszeichenliste

- 1: Lager
- 2: Gasse
- 4, 6: Lagerregal
- 8: Regalfahrzeug
- 10: Schiene
- 12: Fördereinrichtung
- 14: Seitenwand
- 16: Tragprofil
- 18, 20: horizontal verlaufender Abschnitt
- 19, 21: vertikal verlaufender Abschnitt
- 22: obere Laufbahn
- 24: untere Laufbahn
- 26: Gegenstand
- 28: Lagerkanal
- 30: Lagerfahrzeug
- 32: Fahreinheit
- 34: Hubeinheit
- 36: Kopplung
- 38: Laufrad
- 39: Laufebene
- 40: Tragrad
- 41: Tragebene
- 42, 44: Führungsrad
- 46: Schwenkachse
- 48: Befestigungsschlitten
- 50: Führung
- 51: Pfeil
- 52: Unterplatte
- 54: Oberplatte (Hubplattform)
- 56: Verbindungsmittel
- 58: Sicherungsriegel
- 60: Senkrechtschlitten (Lastaufnahmemittel)
- 62: Zahnriemen
- 64: Pfeil (Längsrichtung)
- 66: Plattenband
- 68, 70: Arm
- 72, 74: Lineareinheit
- 76: Drehscheibe
- 77: Mitnehmer
- 78: Tragprofil
- 80: Kettenförderer
- 82, 84: Achse

- h: Höhe (von 34)
- H: vertikaler Abstand (22/41 und 24/39)
- Hv: vertikaler Abstand (zwischen 22 und 16)
- L: horizontaler Abstand (zwischen 22 und 24)
- W1, W2: Spurweite (von 22, 24 bzw. 38, 40)

## Patentansprüche

1. Lagerfahrzeug (30) zum Betrieb in einem Regellager (1), mit einer mit mindestens einem Antriebsmotor und Laufrädern (38) versehenen Fahreinheit (32) und einer mit Tragrädern (40) und einer anheb- und absenkbaren Hubplattform (54) versehenen Hubeinheit (34), **dadurch gekennzeichnet, daß** Fahreinheit (32) und Hubeinheit (34) über eine flexible Kopplung (36) miteinander verbunden sind, wobei die Kopplung (36) eine Winkelverlagerung zwsichen Fahr- und Hubeinheit (32, 34) um eine vertikale Achse ermöglicht.

2. Lagerfahrzeug nach Anspruch 1, **dadurch gekennzeichnet, daß** die Kopplung (36) auch eine Winkelverlagerung zwischen Fahr- und Hubeinheit (32, 34) um eine horizontale (46) Achse ermöglicht.

3. Lagerfahrzeug nach einem der vorangehenden Ansprüche, **dadurch gekennzeichnet, daß** die Kopplung (36) eine begrenzte Relativbewegung zwischen Fahr- und Hubeinheit (32, 34) in vertikaler und/oder horizontaler Richtung ermöglicht.

4. Lagerfahrzeug nach einem der vorangehenden Ansprüche, **dadurch gekennzeichnet, daß** ein Hubantrieb zum Anheben und Absenken der Hubplattform (54) in der Fahreinheit (32) integriert ist.

5. Lagerfahrzeug nach einem der vorangehenden Ansprüche, **dadurch gekennzeichnet, daß** die Hubeinheit (34) eine Unterplatte (52) und eine die Hubplattform (54) tragende oder bildende Oberplatte (54) aufweist, wobei Unter- und Oberplatte (52, 54) durch einen Hubantrieb gegeneinander bewegbar sind.

6. Lagerfahrzeug nach Anspruch 5, **dadurch gekennzeichnet, daß** zwischen Unter- und Oberplatte (52, 54) Keilflächen angeordnet sind, die bei einer horizontalen Relativbewegung zwischen Ober- und Unterplatte eine Vertikalbewegung der Oberplatte bzw. der Hubplattform (54) bewirken.

7. Lagerfahrzeug nach einem der vorangehenden Ansprüche, **dadurch gekennzeichnet, daß** die Laufräder (38) einen größeren Durchmesser als die Tragräder (40) aufweisen.

8. Lagerfahrzeug nach einem der vorangehenden Ansprüche, **dadurch gekennzeichnet, daß** die Laufräder (38) eine größere Spurweite (W) als die Tragräder (40) aufweisen.

9. Lagerfahrzeug nach einem der vorangehenden Ansprüche, **dadurch gekennzeichnet, daß** die Laufräder zum Abrollen auf einer Laufebene (39) angeordnet sind, die oberhalb einer Tragebene (41) liegt, auf der die Tragräder (40) abrollen.

10. Lagerfahrzeug nach Anspruch 9, **dadurch gekennzeichnet, daß** die Laufebene (39) einen vertikalen Abstand (H) von der Tragebene (41) aufweist, der mindestens einer Bauhöhe (h) der Hubeinheit (34) entspricht.

11. Lagerfahrzeug nach einem der vorangehenden Ansprüche, **dadurch gekennzeichnet, daß** an einer Stirnseite der Hubeinheit (34) ein Sicherungsriegel (58) für einen transportierten Gegenstand angeordnet ist, der bei abgesenkter Hubplattform eingezogen und bei angehobener Hubplattform ausgefahren ist.

12. Regalfahrzeug (8) mit einem vertikal verfahrbaren Lastaufnahmemittel (60) zum Aufnehmen eines Lagerfahrzeugs (30) nach einem der vorangehenden Ansprüche, mit zwei einander gegenüberliegend angeordneten horizontalen Tragprofilen (78), die jeweils zwei vertikal und horizontal gegeneinander versetzte Laufbahnen (22, 24) für Räder eines Lagerfahrzeugs (30) bilden, wobei an dem Lastaufnahmemittel (60) ein Lademittel (72, 74) angeordnet ist, mit dem ein Gegenstand erfaßbar und auf das Lastaufnahmemittel (60) oder ein darauf befindliches Lagerfahrzeug (30) oder von diesem wegbewegbar ist.

13. Regalfahrzeug (8) nach Anspruch 12, **dadurch gekennzeichnet, daß** entlang eines Teilbereichs der Tragprofile (78) die oberen, außenliegenden Laufbahnen (22) jeweils durch einen Ketten- oder Gurtförderer (80) ersetzt sind.

14. Regalfahrzeug (8) nach Anspruch 12 oder 13, **dadurch gekennzeichnet, daß** die Tragprofile (78) quer zu einer Fahrtrichtung (64) des Regalfahrzeuges (8) ausgebildet sind.

15. Regalfahrzeug (8) nach Anspruch 12, **dadurch gekennzeichnet, daß** an dem Regalfahrzeug (8) eine Dreheinrichtung (76) angeordnet ist, um die Tragprofile (78) leer oder mit einem aufgenommenen Lagerfahrzeug (30) in eine gewünschte Stellung zu drehen, um ein Lagerfahrzeug (30) aufzunehmen oder freizugeben.

16. Regalfahrzeug nach Anspruch 15, **dadurch gekennzeichnet, daß** die Dreheinrichtung als Drehscheibe (76) ausgebildet ist.

17. Regalfahrzeug nach Anspruch 15 oder 16, **dadurch gekennzeichnet, daß** die Dreheinrichtung (76) beiderseits zu einer Längsrichtung (64), in der das Regalfahrzeug (8) verfahrbar ist, um jeweils 90° drehbar ist.

18. Regalfahrzeug nach einem der Ansprüche 15 bis 17, **dadurch gekennzeichnet, daß** das Lademittel (20) zur Drehung mit der Dreheinrichtung (76) angeordnet ist.

19. Regalfahrzeug nach einem der Ansprüche 12 bis 18, **dadurch gekennzeichnet, daß** das Lademittel in Form von zwei parallel angeordneten Lineareinheiten (72, 74) ausgebildet ist.

20. Regalfahrzeug nach Anspruch 19, **dadurch gekennzeichnet, daß** die Lineareinheiten (72, 74) unabhängig voneinander bewegbar sind, um einen Anschlag für einen auf das Regalfahrzeug bewegten Gegenstand zu bilden.

21. Regalfahrzeug nach einem der Ansprüche 12 bis 20, **dadurch gekennzeichnet, daß** das Lademittel durch zwei gegenläufig arbeitende Schieber gebildet ist, von denen einer der Aufnahme und einer der Abgabe eines Gegenstands dient.

22. Regalfahrzeug nach einem der Ansprüche 15 bis 21, **dadurch gekennzeichnet, daß** auf dem Lastaufnahmemittel (60) benachbart zu der Dreheinrichtung (76) ein quer zu einer Längsrichtung (64), in der das Regalfahrzeug (8) verfahrbar ist, bewegbarer Horizontalförderer (66) für Gegenstände angeordnet ist.

## Claims

1. Store vehicle (30) for operation in a shelf warehouse (1), with a travelling unit (32) equipped with at least one drive motor and running wheels (38) and a lifting unit (34) equipped with support wheels (40) and a lifting and lowering platform (54), **characterised in that** said travelling unit (32) and lifting unit (34) are interconnected by means of a flexible coupling (36), the coupling (36) enabling an angular displacement between the travelling unit and lifting unit (32,34) about a vertical axis.

2. Store vehicle according to claim 1, **characterised in that** the coupling (36) also enables an angular displacement between the travelling and lifting units (32, 34) about a horizontal (46) axis.

3. Store vehicle according to one of the preceding claims, **characterised in that** the coupling (36) enables a limited relative movement between the travelling and lifting units (32, 34) in the vertical and/or horizontal direction.

4. Store vehicle according to one of the preceding claims, **characterised in that** a lifting drive for raising and lowering the lift platform (54) is integrated in the travelling unit (32).

5. Store vehicle according to one of the preceding claims, **characterised in that** the lifting unit (34) has a base plate (52) and a top plate (54) which supports or forms the lifting platform (54), the base and top plates (52, 54) being moveable towards one another by a lifting drive.

6. Store vehicle according to claim 5, **characterised in that** between the base and top plates (52, 54), there are inclined faces arranged which effect a vertical movement of the top plate or lifting platform (54) when there is any horizontal relative movement between the top and base plates.

7. Store vehicle according to one of the preceding claims, **characterised in that** the running wheels (38) have a larger diameter than the support wheels (40).

8. Store vehicle according to one of the preceding claims, **characterised in that** the running wheels (38) have a wider gauge (W) than the support wheels (40).

9. Store vehicle according to one of the preceding claims, **characterised in that** the running wheels are arranged to roll along a running plane (39), which lies above a support plane (41), on which the support wheels (40) roll.

10. Store vehicle according to claim 9, **characterised in that** the running plane (39) is at a vertical distance (H) from the support plane (41), which corresponds to at least once the overall height (h) of the lifting unit (34).

11. Store vehicle according to one of the preceding claims, **characterised in that** a security barrier (58) is arranged on one face of the lifting unit (34) for a transported object, which is retracted when the lifting platform is lowered and extended when the lifting platform is raised.

12. Rack lift vehicle (8) with a vertically travelling load-carrying means (60) for accepting a store vehicle (30) according to one of the preceding claims, with two horizontal support profiles (78) arranged opposite each other which each form two tracks (22, 24) offset vertically and horizontally with respect to each other for wheels of a store vehicle (30), with a loading means (72, 74) being arranged on the load-carrying means (60), with which an object can be picked up and placed on the load-carrying means (60) or a store vehicle (30) located thereon or can be moved away from this.

13. Rack lift vehicle (8) according to claim 12, **characterised in that** along a partial area of the support profiles (78) the upper, externally located tracks (22) are each replaced by a chain or belt conveyor (80).

14. Rack lift vehicle (8) according to claim 12 or 13, **characterised in that** the support profiles (78) are formed transversely to one direction of travel (64) of the rack lift vehicle (8).

15. Rack lift vehicle (8) according to claim 12, **characterised in that** a rotating device (76) is arranged on the rack lift vehicle (8) for rotating the support profiles (78) when empty or holding a store vehicle (30) into a desired position, in order to take on or release a store vehicle (30).

16. Rack lift vehicle according to claim 15, **characterised in that** the rotating device is in the form of a turntable (76).

17. Rack lift vehicle according to claim 15 or 16, **characterised in that** the rotating device (76) is rotatable by 90° on both sides of a longitudinal axis (64), in which the rack lift vehicle (8) is moveable.

18. Rack lift vehicle according to one of claims 15 to 17, **characterised in that** the loading means (20) is arranged so as to rotate with the rotating device (76).

19. Rack lift vehicle according to one of claims 12 to 18, **characterised in that** the loading means is embodied in the form of two linear units (72, 74) arranged in parallel.

20. Rack lift vehicle according to claim 19, **characterised in that** the linear units (72, 74) can be moved independently of each other, in order to form a limit stop for an object being moved onto the rack lift vehicle.

21. Rack lift vehicle according to one of claims 12 to 20, **characterised in that** the loading means is formed by two sliders working in opposite directions, one serving to accept and one serving to discharge an object.

22. Rack lift vehicle according to one of claims 15 to 21, **characterised in that** a horizontal conveyor for objects (66), moveable transversely to a longitudinal axis (64) in which the rack lift vehicle (8) is displaceable, is arranged on the load-carrying means (60) adjacent to the rotating device (76).

## Revendications

1. Chariot de transport pour entrepôt (30), pour fonctionner dans un entrepôt à rayonnages (1), avec une unité de déplacement (32) munie d'au moins un moteur d'entraînement et de roues de déplacement (38) et d'une unité de levage (34), munie de roues porteuses (40) et d'une plateforme de levage (54) levable et abaissable, **caractérisé en ce que** l'unité de déplacement (32) et l'unité de levage (34) sont reliées ensemble par l'intermédiaire d'un accouplement (36) flexible, l'accouplement (36) permettant un déplacement angulaire entre unités de déplacement et de levage (32, 34), autour d'un axe vertical.

2. Chariot de transport pour entrepôt selon la revendication 1, **caractérisé en ce que** l'accouplement (36) permet également un déplacement angulaire entre unités de déplacement et de levage (32, 34), autour d'un axe horizontal (46).

3. Chariot de transport pour entrepôt selon l'une des revendications précédentes, **caractérisé en ce que** l'accouplement (36) permet un déplacement relatif limité entre entre unités de déplacement et de levage (32, 34), en direction verticale et/ou horizontale.

4. Chariot de transport pour entrepôt selon l'une des revendications précédentes, **caractérisé en ce qu'**un entraînement de levage est intégré dans l'unité de déplacement (32), pour lever et abaisser la plateforme de levage (54).

5. Chariot de transport pour entrepôt selon l'une des revendications précédentes, **caractérisé en ce que** le dispositif de levage (34) présente une plaque inférieure (52) et une plaque supérieure (54) portant ou formant la plateforme de levage (54), les plaques inférieure et supérieure (52, 54) étant déplaçables l'une par rapport à l'autre au moyen d'un entraînement de levage.

6. Chariot de transport pour entrepôt selon la revendication 5, **caractérisé en ce qu'**entre les plaques inférieure et supérieure (52, 54) sont disposées des surfaces de coin qui, dans le cas d'un déplacement relatif horizontal entre plaque supérieure et inférieure, provoquent un déplacement vertical de la plaque supérieure ou de la plateforme de levage (54).

7. Chariot de transport pour entrepôt selon l'une des revendications précédentes, **caractérisé en ce que** les roues de déplacement (38) présentent un plus grand diamètre que les roues porteuses (40).

8. Chariot de transport pour entrepôt selon l'une des revendications précédentes, **caractérisé en ce que** les roues de déplacement (38) présentent une plus grande voie d'écartement (W) que les roues porteuses (40).

9. Chariot de transport pour entrepôt selon l'une des revendications précédentes, **caractérisé en ce que** les roues de déplacement sont disposées pour rouler sur un plan de déplacement (39) situé au-dessus d'un plan de portage (41), sur lequel les roues porteuses (40) roulent.

10. Chariot de transport pour entrepôt selon la revendication 9, **caractérisé en ce que** le plan de déplacement (39) présente, par rapport au plan de portage (41), un espacement (H) vertical correspondant au moins à une hauteur de construction (h) de l'unité de levage (34).

11. Chariot de transport pour entrepôt selon l'une des revendications précédentes, **caractérisé en ce que,** sur une face frontale du dispositif de levage (34), est disposé un verrou de sécurité (58) pour un objet transporté, qui est rentré lorsque la plateforme de levage est abaissée et est sorti lorsque la plateforme de levage est levée.

12. Véhicule pour rayonnages (8) avec des moyens support de charge (60) déplaçables verticalement, pour supporter un chariot de transport pour entrepôt (30) selon l'une des revendications précédentes, avec deux profilés support (78) horizontaux disposés l'un en regard de l'autre, formant chacun deux pistes de déplacement (22, 24), décalées verticalement et horizontalement l'une par rapport à l'autre, pour des roues d'un chariot de transport pour entrepôt (30), sur les moyens support de charge (60) étant disposés des moyens de chargement (72, 7), à l'aide desquels un objet peut être saisi et placé sur les moyens support de charge (60) ou un chariot de transport pour entrepôt (30) se trouvant dessus, ou enlevé de ces moyens ou chariot.

13. Véhicule pour rayonnages (8) selon la revendication 12, **caractérisé en ce que,** le long d'une zone partielle des profilés support (78), les pistes de déplacement supérieures (22) extérieures sont chacune remplacées par un transporteur à chaîne ou à courroie (80).

14. Véhicule pour rayonnages (8) selon la revendication 12 ou 13, **caractérisé en ce que** les profilés support (78) sont réalisés transversalement à une direction de déplacement (64) du véhicule pour rayonnages (8).

15. Véhicule pour rayonnages (8) selon la revendication 12, **caractérisé en ce que,** sur le véhicule pour rayonnages (8), est disposé un dispositif de rotation (76), pour faire tourner en une position souhaitée les profilés support (78), à vide ou avec un chariot de transport pour entrepôt (30) supporté, pour recevoir ou libérer un chariot de transport pour entrepôt (30).

16. Véhicule pour rayonnages selon la revendication 15, **caractérisé en ce que** le dispositif de rotation est réalisé sous forme de disque tournant (76).

17. Véhicule pour rayonnages selon la revendication 15 ou 16, **caractérisé en ce que** le dispositif de rotation (76) est susceptible de tourner d chaque fois 90°, de part et d'autre d'une direction longitudinale (64), dans laquelle le véhicule pour rayonnages (8) est déplaçable.

18. Véhicule pour rayonnages selon l'une des revendication 15 à 17, **caractérisé en ce que** les moyens de chargement sont disposés pour tourner avec le dispositif de rotation (76).

19. Véhicule pour rayonnages selon l'une des revendication 12 à 18, **caractérisé en ce que** les moyens de chargement sont réalisés sous forme de deux unités linéaires (72, 74) disposées parallèlement.

20. Véhicule pour rayonnages selon la revendication 19, **caractérisé en ce que** les unités linéaires (72, 74) sont déplaçables indépendamment l'une de l'autre, pour former une butée pour un objet déplacé sur le véhicule pour rayonnages.

21. Véhicule pour rayonnages selon l'une des revendication 12 à 20, **caractérisé en ce que** les moyens de chargement sont formés par deux poussoirs travaillant ne sens inverse, dont l'un sert à recevoir un objet et l'autre sert à le délivrer.

22. Véhicule pour rayonnages selon l'une des revendication 15 à 21, **caractérisé en ce qu'**un transporteur horizontal (66) pour des objets, déplaçable transversalement par rapport à une direction longitudinale (64), dans laquelle le véhicule pour rayonnages (8) est déplaçable, est disposé sur les moyens support de charge (60), au voisinage du dispositif de rotation (76).
